# EUROPEAN PATENT SPECIFICATION

(11) **EP 0 813 716 B1**
(45) Date of publication and mention of the grant of the patent: **14.05.2003**
(21) Application number: 96903850.4
(22) Date of filing: 04.03.1996
(51) Int. Cl.: G06F 17/30, G06F 11/32, H04H 9/00, H04N 7/088, G06F 17/60, G11B 27/034

(54) **AUTOMATIC BROADCAST MONITORING SYSTEM**
AUTOMATISCHES RUNDFUNK-ÜBERWACHUNGSSYSTEM
SYSTEME DE SURVEILLANCE AUTOMATIQUE DE SIGNAUX DE DIFFUSION

(30) Priority: 04.03.1995 GB 9504376
(43) Date of publication of application: 29.12.1997
(73) Proprietor: March Networks Corporation, Kanata, Ontario K2K 2X3 (CA)
(72) Inventor: MENARD, Robert, Nepean, Ontario K2G 2V2 (CA); MACLEAN, Roger, Nepean, Ontario K2G 2A6 (CA); STREATCH, Paul, Richmond, Ontario K0A 2Z0 (CA)
(74) Representative: Harding, Richard Patrick
(86) International application number: CA9600131
(87) International publication number: WO96027840

(56) References cited:
- EP-A- 0 248 533
- US-A- 4 230 990
- US-A- 4 845 658
- US-A- 4 857 999
- US-A- 5 192 999
- US-A- 5 210 611
- US-A- 5 253 061
- US-A- 5 343 251
- COMMUNICATIONS OF THE ACM, vol. 35, no. 12, December 1992, USA, pages 39-48, XP000334363 S. LOEB: "Architecting Personalized Delivery of Multimedia Information"
- INTERNETWORKING, RESEARCH AND EXPERIENCE, vol. 5, no. 4, December 1994, UK, pages 151-162, XP002002475 J.C. PASQUALE: "The Multimedia Multicast Channel"

## Description

This invention relates to a system for automatically monitoring broadcasts, such as television broadcasts, and detecting content of particular interest to individual viewers.

Many organizations, for example, stock brokerage services, have an on-going need to monitor world events. It is known for such organizations to retain media and news scanning services that employ people to watch television to look for particular topics of interest. These services log occurrences of particular items and either advise their customers by telephone or provide reports that may include video clips that they manually put together. For example, the service might continuously record a particular television channel while someone watches it. The person watching will record in a log the occurrences of interest, noting the time and tape position. The recorded tapes will later be searched using the time or tape position from the logs. Edited clips are then put together in a time consuming manual process.

The shortcomings with this method are many. The response time in noticing an event of interest is slow, typically minutes. Many hours may pass before the interested party is informed of the event. The cost of paying people to watch television is high. For example, at $10 per hour, twelve hours per day, the cost works out at $43,800 per channel per year. Looking up individual video clips is very slow and requires knowledgeable staff because the look-up is keyed to time of occurrence rather than words or phrases. Typical tape fast forwards or rewinds take three to five minutes each. The approach is also inflexible in that any new search on recorded video requires people to Watch it all over again, thus incurring the entire overhead again.

Other solutions include raw television capture devices for computers. These capture devices convert the television video to digital format for storage and distribution on computer networks. These products capture the raw footage, but are not in any way dependent on content. They may capture and distribute video, and/or audio, and/or caption text, but they do not alert users to particular topics immediately as they occur on television broadcasts.

Another solution uses a technique called datacasting. With this technique, the broadcaster injects data into the vertical blanking interval (VBI) of the video television a signal that contains information about the program. The data is created by the broadcaster, or source program author. The data usually contains titles, summaries, and other information related to the program. This information can be used by the user to select items of interest. The disadvantage to this approach is that it requires special information to be created as the source and transmitted from the source. It also requires special proprietary hardware to receive the data, and more significantly still requires the user to continually monitor the datacast information. This VBI data injection approach has another major shortcoming in that very few, if any broadcast stations use this technique, and those that do encode it so that special equipment is required to decode it. CNN at Work, sold by Intel is an example of such a product.

The article "Architecting Personalised Delivery of Multimedia Information", Communications of the ACM, vol. 35, no. 12, December 1992, USA discusses in a speculative manner various schemes for storing, filtering and retrieving information. These schemes rely upon the identification of tags or indices which represent discrete blocks of information. For example, a single music track may be classed according to mood (cheerful, romantic, etc) and given an evaluation (bad, good etc).

Existing schemes include datacasting, where a broadcaster transmits data in the vertical blanking interval of a video television signal. This data is created by the broadcaster and does not change continuously with the programme material. Indeed, the broadcast information may not be representative of the programme material at all, but may represent some other information required by the broadcaster and/or receiver.

An object of the invention is to alleviate the aforementioned disadvantage of the prior art.

### SUMMARY OF THE INVENTION

According to the present invention there is provided a system for monitoring broadcast signals, comprising means for receiving the broadcast signals and generating program signal streams to make available programs carried by said broadcast signals; user-operable selection means for inputting criteria identifying program content of interest to a user; a database for storing data representing said criteria; recognition means for generating from said broadcast signals, for each program signal stream, a program data stream continually representing broadcast program material and changing dynamically therewith; means for synchronizing said program data stream to said program signal streams so that said program data stream always corresponds to the program material being broadcast; a comparator for comparing said program data stream with said stored data; means for storing, when said program data stream matches said stored data, a segment of said program signal stream and a segment of the corresponding program data stream associated therewith while maintaining synchronism between the program data stream and the program material; and display means permitting the user to examine a portion of a stored program segment by selecting the portion of the dynamic program data stream segment corresponding thereto.

As the program data stream used to identify program segments of interest to a user continually represents the broadcast program material and dynamically changes therewith, the present invention provides a considerable advance over prior art techniques which rely upon the relatively course indexing resulting from an objective analysis of program subject matter.

The broadcast signal can be any type of signals carrying programs and distributed over a suitable transmission medium, wireless, cable or satellite. In one embodiment, the broadcast signals are television signals (although radio signals can in some cases be used if they are accompanied by program data, as is sometimes the case). They may also be television signals distributed digitally, for example, using the MPEG format.

In the case of television signals, the recognition means can monitor the closed caption text normally transmitted with the signals, in which case the program material to which it corresponds is the sound track. Upon detection of certain words or phrases, the system generates an alarm condition to alert the user to the presence of such program content. For instance, in the case of a standard television set, a simple system could just turn up the volume so as to allow the user to hear the audio. In a more sophisticated system, the signals are stored and tagged for subsequent retrieval using database searching techniques.

The system can also take predetermined action in the event of a match. This can be any form of action that permits the user to examine the portion of the program of interest. For example, it can involve recording the program signals and data signals for later review, activating a video window in a computer, or just activating a beeper to alert the user to the broadcast of program content of interest. For example, a message could be sent to a beeper advising the user that "Clinton is on television now", thus enabling him to watch the program on the nearest television set.

In another embodiment voice or pattern recognition techniques can be employed to monitor the audio or video directly.

Thus, with the system according to the invention, users can be automatically alerted to events as they happen. Video, audio and closed captions from television broadcasts can be automatically indexed and stored so they can be retrieved later in whole or in part, using ad hoc queries. Users can retrieve individual clips of video, audio or closed caption text by specifying content, for example by searching for a key word or phrase in addition to the traditional time/position based queries.

The invention is thus capable of automatic detection of content in television broadcasts using computers, synchronizing and capturing the incoming closed captioned text together with the video and audio in a computer environment, and indexing and retrieval of individual sections of video and audio based on the content of, for example, closed caption text.

The invention is applicable to the field of multimedia applications generally. It provides techniques for automatically creating indexed multimedia databases and has many applications. For example, government elected representatives and their assistants can monitor television programs to determine what is being said about them, about their policies, etc. They can be alerted to issues immediately.

Regulated or government organizations can use this invention to monitor television programs for negative (or positive) views on their organizations. They can know about problems reported in the media and react sooner. They can track the media reaction to their policies.

Marketing departments can use this invention to collect information on competitors, customers of the organizations that employ them. They can be alerted to issues immediately. As well, marketing multimedia databases can be built automatically.

Broadcast industry, cable carriers and telephone companies can use this system to create and maintain multimedia databases. Cable Companies and Telco's can use this invention to provide differentiated services to their customers, for example filtering and querying capability on live broadcasts and also on multimedia databases.

Individuals can use this technology to minimize time spent watching television. Items not of interest can be filtered out. Program transcripts can be captured and perused with only the desired video and audio being played back.

The invention also provides other multimedia applications and databases with access to fully indexed video, audio and closed captions from broadcast television.

The invention also provides a multimedia computer system, comprising a central processing unit; a video capture unit for receiving broadcast television signals and generating a video signal therefrom; a video display unit capable of displaying said video signals under program control; means for decoding data signals embedded in said television signals and generating a program data stream representative of program material carried by said television signals and changing dynamically therewith, said program data stream being synchronized with said television signals so that said program data stream always corresponds to the program material carried thereby; means for inputting criteria identifying program content of interest to a user; a database for storing data representing said criteria; means for storing a program segment and the program data stream associated therewith while maintaining synchronism between the program data stream and the program material in said segment; display means permitting the user to examine a portion of a stored program segment by selecting a portion of the dynamic program data stream corresponding thereto; and said central processing unit being programmed to continually compare the program data with said stored data and to store a program segment with its associated program data stream when said program data matches said stored data.

### BRIEF DESCRIPTION OF THE DRAWINGS

The invention will now be described in more detail, by way of example only, with reference to the accompanying drawings, in which:-
Figure 1 is a block diagram of a system in accordance with the invention showing the overall system architecture;
Figure 2 is a block diagram showing the internal architecture of the system shown in Figure 1;
Figure 3 is a flow chart showing the closed caption stream processing;
Figure 4 is a flow chart showing audio stream processing;
Figure 5 is a flow chart showing video stream processing;
Figure 6 is a flow chart showing the alert handling procedure; and
Figure 7 is a flow chart showing the stored data processing;
Figure 8 is an embodiment of the invention based on a standard stand-alone multimedia personal computer;
Figure 9 is a functional block diagram of a live feed arrangement for the embodiment shown in Figure 8;
Figure 10 is a functional block diagram of'a network feed arrangement;
Figure 11 is a functional block diagram of an arrangement for playing back or re-recording a video segment;
Figure 12 shows a typical display screen;
Figure 13 shows a typical display screen showing a program listing; and
Figure 14 is a block diagram of another embodiment of the invention applicable to an on-demand architecture.

### DESCRIPTION OF THE PREFERRED EMBODIMENTS

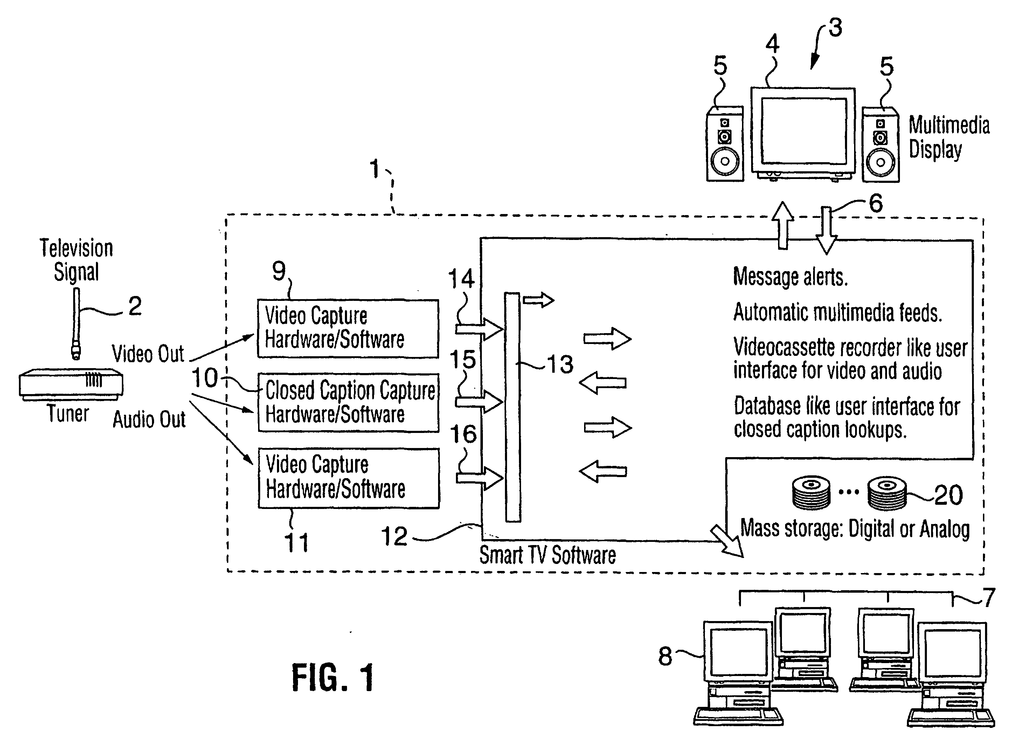

In Figure 1, a monitoring system 1 in accordance with the invention receives a standard broadcast television signal from a tuner 2. The system is connected over a bidirectional link 6 to a multimedia display 3 consisting of a personal computer including a CRT monitor 4 and speakers 5. The multimedia display can form part of a conventional multimedia PC set-up. The system 1 can also be connected to a network 7, which in turn is connected to individual workstations 8.

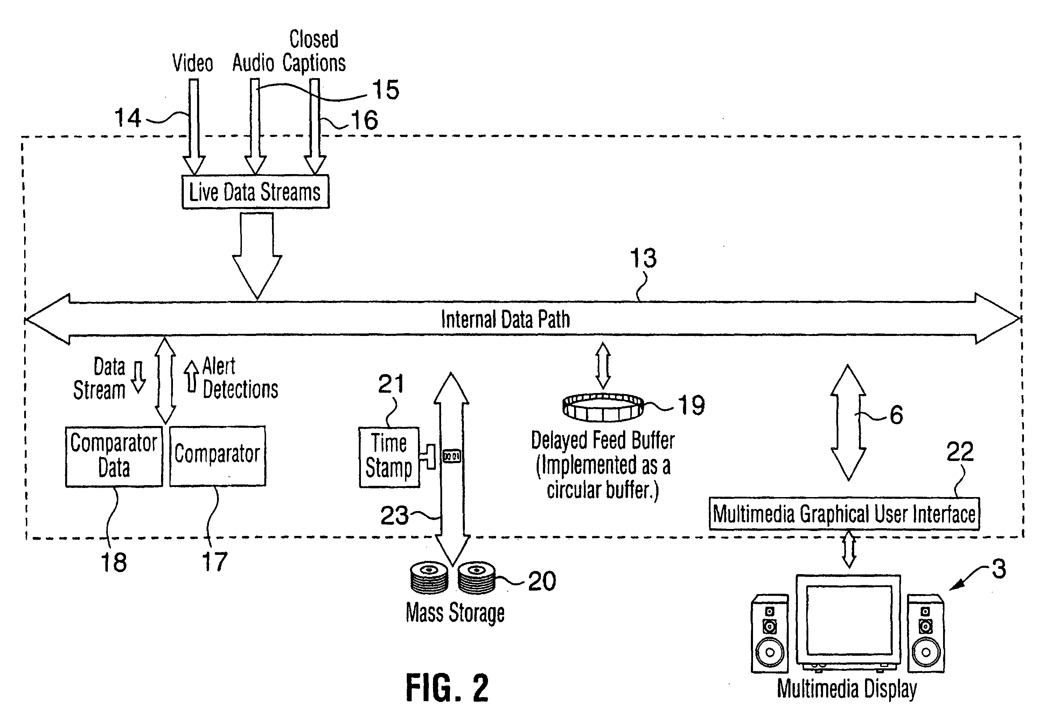

The monitoring system 1 comprises a video capture unit 9, a closed caption capture unit 10, and an audio capture unit 11. Such units are *per se* commercially available. Data streams 14, 15, 16, which are preferably digital although they could be analogue, from these units are passed to bus 13 of unit 12, shown in more detail in Figure 2. Unit 12 carries out several functions as follows:
- Video, audio and closed Caption data streams are synchronized and tagged for time of arrival.
- Users are alerted to program content by continuous checking of the closed caption text stream.
- Video, audio and closed captions are saved to disk storage. The video and audio clips can be retrieved by word or phrase using the closed captioned text and the synchronizing tags that index the video and audio. The Video, audio and closed caption text might be saved to disk continuously but the recording of the data can also be based on content. For example, the system might be instructed to start recording video, audio and closed caption data from 30 seconds before (using a delayed feed buffer) to 5 minutes after the appearance of a keyword in the closed caption stream. This is significant since continuous storage of video data imposes huge storage requirements.
- Clients on the network 7 can receive alerts, multimedia feeds and perform queries as shown on the multimedia display above.

In operation, the user enters data either through, for example, a LAN-connected PC 8 or the workstation 3. For example, the user might enter a series of key words representing topics of interest. These key words are then entered into a profile database in mass storage device 20 along with the identity of the user. When the selected key words appear in the closed caption data stream, the system generates an alert signal to alert the user. For example, the system might be set to trigger an alert if the words CLINTON and YELTSIN occur within an adjacent stream of twenty words. In a simple case, the alert may, for example, involve turning up the sound on the monitor 4. If desired, the system can also employ fuzzy logic principles to find similar words, for example, synonyms of the words entered by the user. This arrangement also copes with mis-spellings, which are quite common in closed caption systems.

Each user connected to the system can of course enter his or her own customized search profile.

Referring now to Figure 2, when the system is monitoring the broadcast signals, the incoming data streams 14, 15, 16 are passed over internal bus 13 to comparator 17, which compares the data with comparison data stored in a profile database 18 set-up by the user in mass storage unit 20. Database 18 stores the data entered by the user through the multimedia PC 3. For example, the user may have chosen a set of keywords and phrases to look for in the closed caption data stream. These are entered through multimedia PC 3 and stored in the database 18.

The incoming data streams, or as noted above selected portions of them, are stored in mass storage device 20 along with a time stamp added by time stamp unit 21. Storage device 18 may be analogue, although it is preferably digital to allow random access to the information.

Through PC 3, the user can also set up other actions for the system to perform when a keyword or phrase is found. These actions include sounding a beep, activating a remote beeper, opening a video window, sending electronic mail - essentially any action the computer can be programmed to perform. Also the system can automatically create a profile, (or comparator database), from an existing database, spreadsheet or word processor file, that can be used for monitoring. The system creates this profile by searching the specified files for proper nouns, categories and pre-defined keywords. After retrieving these from the specified file, they are presented to the user for modification.

Each user 8 on the network can also add, delete, and modify the database profile 18 over the network 7 to customize it for his individual requirements.

When system is storing data, the closed captioned text is stored in a standard text database in the mass storage unit 20. There are at least two columns in the database, namely the captured phrase and the absolute time it was captured. The audio stream and video streams are also captured together with their absolute start time. Individual sections of video and audio can be retrieved using SQL-like queries on the closed captioned text. The associated video and audio are retrieved using absolute time returned from the text query. The system will position to the exact time within the video and audio that the word or phrase occurs at.

The system also has a delayed feed buffer 19, implemented as a circular buffer. This stores that last n minutes of each of the data streams. The user can specify the length of this buffer and each of the three data streams can have different lengths. This buffer 19 also provides the user with the ability to backup a few seconds or minutes when an alert is received. Using technology known *per se*, the delayed feed buffer can also be played back at double speed so that the user can catch up to the live broadcast.

The system provides the ability to distribute video, audio and text in whole or in part. Lower speed systems may choose only to receive the closed captioned text of a program, or just the audio.

A specific example of the use of the monitoring system is as follows: A television viewer wants to watch the movie "Gone With The Wind". The viewer sets the computer to beep when the words "I don't give a damn" are spoken. Alternatively, having stored the same movie with this technology, they could position directly to the scene where those words are spoken, without having to know where in the movie, by time or relative position, these words occur. The user interface for positioning to the words or phrases of interest is very similar to a word or phrase search in a word processor, or an SQL query.

The system in the embodiment described monitors the incoming closed captioned text stream, synchronizes it with the incoming video and audio, and alerts the user to topics of interest. When an alert happens, programmable actions, such as sounding a beep and/or bringing up a video window, occur. The incoming video, audio and closed caption text are stored with time based tags and indexes, creating a fully indexed multimedia database automatically.

Users have an SQL-like query capability on closed caption text with an ability to retrieve associated portions of video and audio. They can configure the monitoring software for particular words, phrases or general content, and perform particular actions upon alerts.

The video, audio and closed captioned text can be distributed on the computer network 7, either directly or through electronic mail. The system and network managers can be provided with an ability to manage the system and network resource usage.

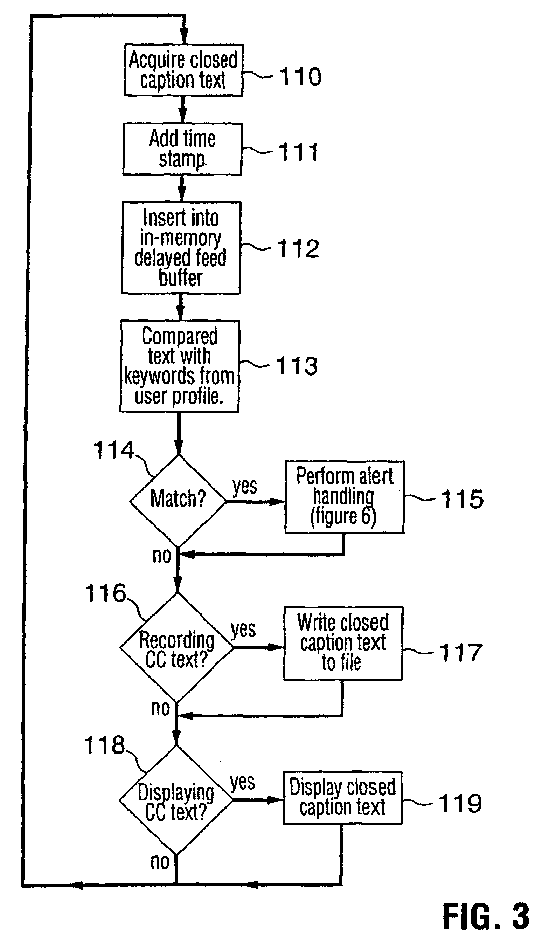

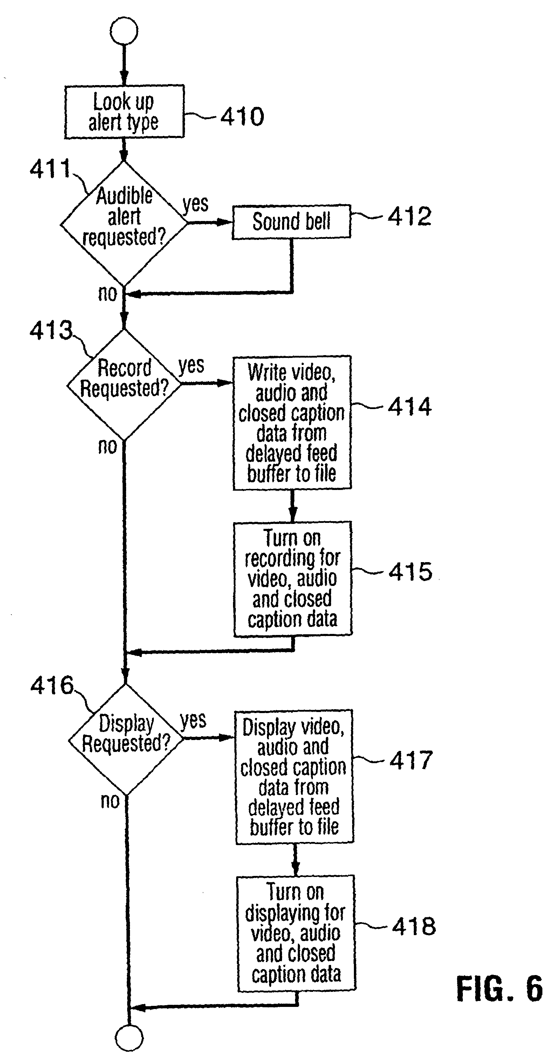

Figure 3 shows the processing of the embedded data stream, which in this embodiment constitutes the closed caption stream. The text is first acquired in unit 110 and after insertion of a time-stamp in unit 111 inserted into the delayed feed buffer 19, after which is compared to comparator 113 for comparison with words from the user profile stored in storage unit 20. If a match is found, decision unit 114 activates alert handling unit 115 (shown in more detail in Figure 6).

In the absence of a match, decision unit 116 determines whether the closed caption text is to be recorded in accordance with user instructions. If yes, the closed caption text is written to file in unit 117; if not, unit 118 determined whether the text is to be displayed in closed caption display 119.

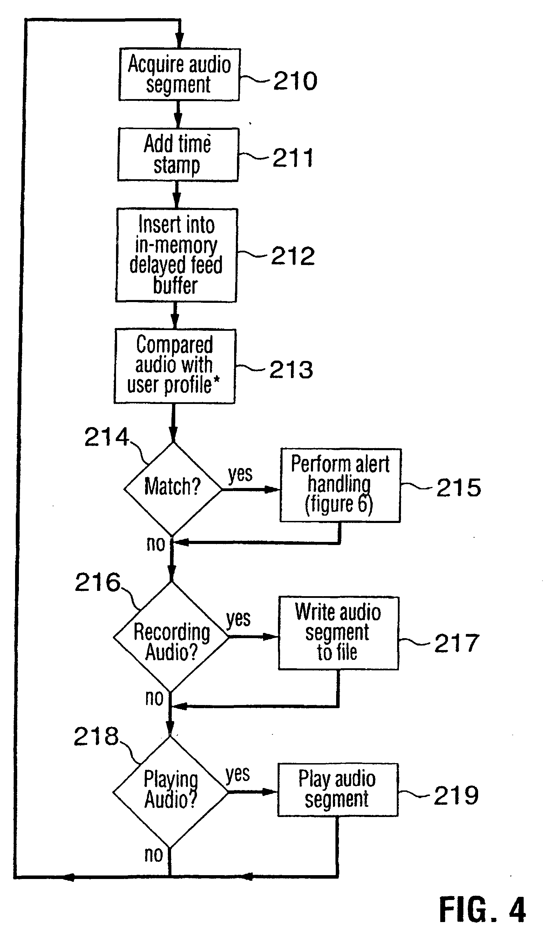

Figure 4 is a flow chart similar to Figure 3 for pattern matching based on audio, which is treated separately from the video. Audio units 210 to 219 operate in a similar manner to units 110 to 119 in Figure 3 except for the fact that the pattern matching is achieved by extracting text from the audio stream using voice recognition techniques.

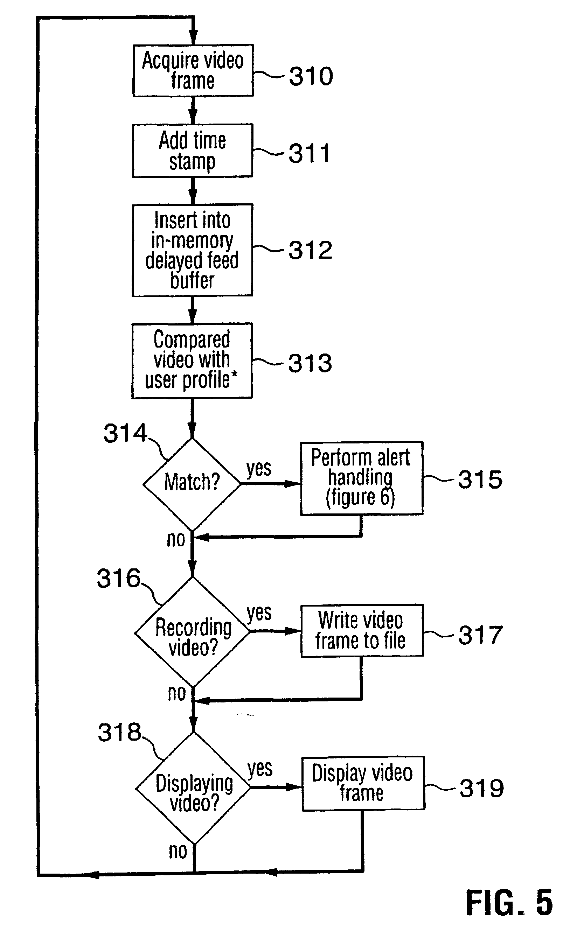

Figure 5 is a flow chart similar to Figure 3 for pattern matching based on video, which is treated separately from the audeo. Video units 310 to 319 operate in a similar manner to units 110 to 119 in Figure 3 except for the fact that the pattern matching is achieved by extracting text from the video stream using pattern recognition techniques or by analyzing color histograms, for example.

Figure 6 shows how alerts are handled. When an alert occurs as a result of a pattern match, unit 410 identifies the alert type. If an audible alert has been requested, decision unit 411 sounds bell 412.

Decision unit 413 determines whether a recording has been requested, and if so causes unit 414 to write video, audio, and closed caption data from delayed feed buffer 19 to be written to a file on mass storage unit 20. Unit 415 causes the recording of incoming video, audio, and closed caption data to be commenced.

Decision unit 416 determines whether a display has been requested, and if so unit 417 causes unit 418 to start displaying the video, audio and closed caption data.

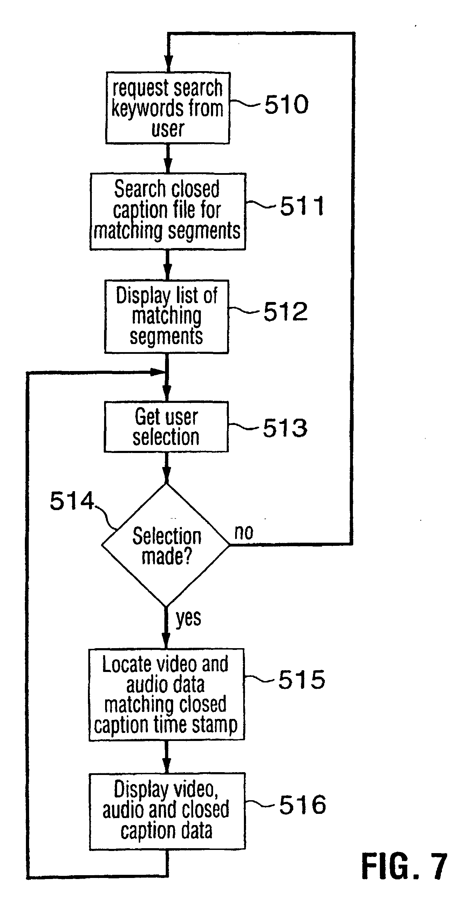

Figure 7 illustrates the stored data handling. One or more keywords are first requested from the user by unit 510. The user enters the keywords through the computer keyboard.

Unit 511 searches the closed caption file for matching keywords and unit 512 displays a list of matching segments. Unit 513 requests a user selection. Decision unit 514 returns control to the request unit 510 if no selection is made; otherwise unit 515 locates the matching segment, which is then displayed by unit 516.

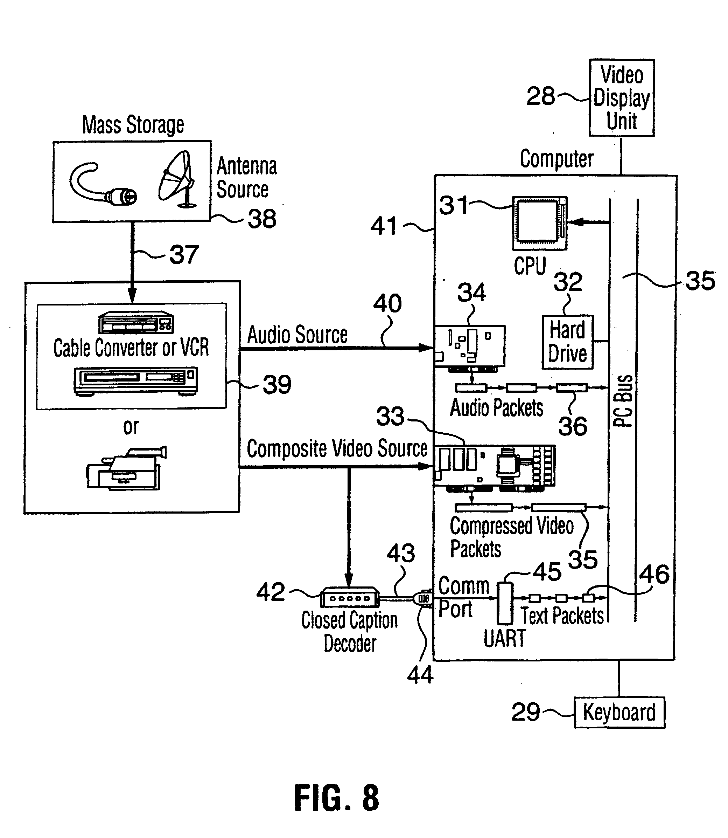

A system in accordance with the invention can conveniently be implemented as a stand-alone system on a personal computer running a Windows™ operating system as shown in Figure 8. Personal computer 30 includes at least a 486 DX66 and preferably a 90MHz Pentium or higher microprocessor 31 on the motherboard and a hard drive 32 with preferably at least one gigabyte of storage space connected to PC bus 35. A Creative Labs Video Blaster™ video capture card 33 is located in one of the expansion slots of the motherboard. A suitable 16-bit sound card 34, such as a Soundblaster™, is located in a second expansion slot. The personal computer 30 is connected to a conventional video display unit 28 and keyboard 29.

The video card 33 and sound card 34 send respective compressed video packets 35 and audio packets 36 to the PC bus 35.

Incoming rf television signals 37 from a cable or antenna source 38 are fed to a cable converter or VCR which demodulates the incoming rf signals and generates an audio stream 40, which is fed to the sound card 34, and a video stream 41, which is fed to the video card 33.

The video signals 41 are also fed to a Sunbelt TextGrabber™ closed caption decoder 42. This decodes the closed caption signals embedded in the vertical blanking interval and sends an ASCII text stream to the PC bus 35 through the serial port 44 and UART 45, which created text packets 46.

The user enters instructions through the keyboard 29 with the assistance of dialog boxes and a mouse (not shown) in a customary manner.

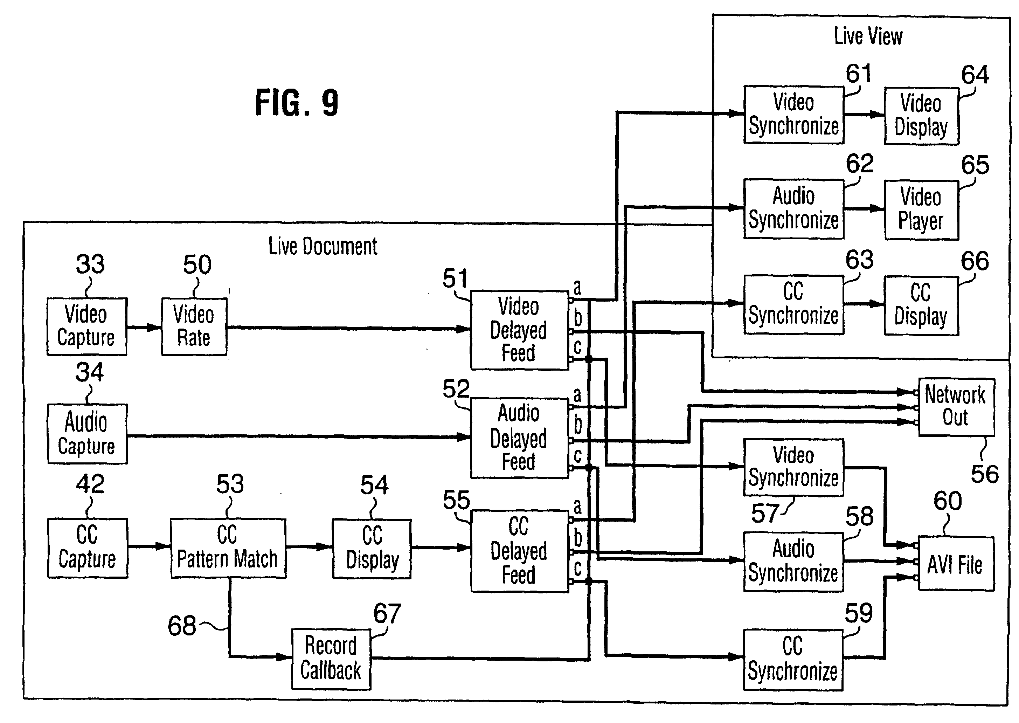

Figure 9 shows in more detail the processing of the signals in the personal computer 30. The video signals are passed through rate controller 50, which measures the frame rate in accordance with user instructions, to video delay unit 51. The audio signals are passed directly from audio capture unit 34 to audio delay unit 52. The closed caption signals are passed through closed caption pattern matching unit 53, which looks for pattern matches with the stored data representing the selected criteria, and closed caption display unit 54 to closed caption delay unit 55. Caption pattern unit 53 can carry out pattern matches on the basis of Boolean combinations of keywords entered by the user through the keyboard 29. For example, the pattern matching circuit 53 might trigger an event if two selected words occur within a stream of twenty adjacent words. The closed caption display unit 54 permits the user to view the closed caption text directly in a window on the video display unit 28 under program control.

The delay units 51, 52, 55 serve as buffers that hold the respective incoming signals for a time that can be selected by the user, for example 10 seconds or 20 seconds. This allows the user to either replay a portion of program material that has just been broadcast or to arrange for the computer to store not only a predefined segment of program material after detection of a pattern match, but also a segment prior to finding a match. For example, a typical set-up may be to store the previous ten seconds and the following twenty seconds after a pattern match. Each delay unit 51, 52, 55 has three output ports a, b, c.

The video delay unit 51, audio delay unit 52, and closed caption delay unit 55 are connected through port b to a network interface 56 for the distribution of captured material over a network, such as a local area network.

The above units are also each connected through port c to a synchronizing unit 57, an audio synchronizing unit 58 and a closed caption synchronizing unit 59. These three units 57, 58, 59 create an AVI (Audio-Video interleaved) file 60 on hard disk 32, which contains a video clip consisting of video, audio and associated closed caption data.

The units 51, 52, and 55 are also connected through port a to additional synchronizing units 61, 62, 63 connected respectively to a video display generator 64, a sound generator 65 in audio card 34, and a closed caption display generator 66. The video and closed captioning thus appear in a window, with the video (and audio) synchronized to the closed captioning.

When a pattern match is detected by the unit 53, a signal 68 is sent to the record callback unit 67. This causes one or more of several predetermined actions to take place depending on the mode selected by the user. The record callback unit activates ports a, b or c of delay units 51, 52, 55 to cause the delayed feed to be sent to the live display through units 61, 62, 63, the network 56, or the AVI file 60 through units 57, 58, 59. Instead of being stored in a computer file, the video and audio (and possibly closed caption stream) could be stored on a VCR tape. The ports can access the buffered signals at any time point in the buffers depending on the user setting.

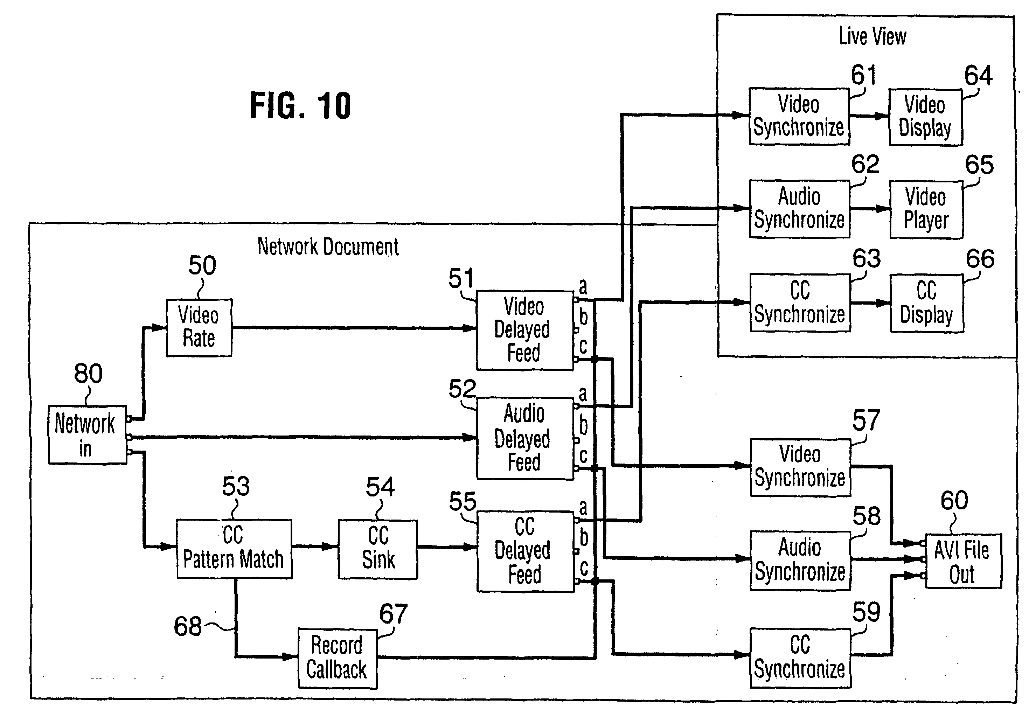

Figure 10 shows an arrangement where the computer receives a feed from a local area network (LAN). In this case the incoming broadcast signals are received by a network server, digitized and transmitted to the clients on the network. The network provides signals equivalent to the capture units 33, 34, 42. The rest of the system remains the same. In this embodiment, only the server requires a video card and closed caption capture unit. The clients receive the digitized signals, including video, sound, and closed captions over a network interface, such as SMC EtherEZ.

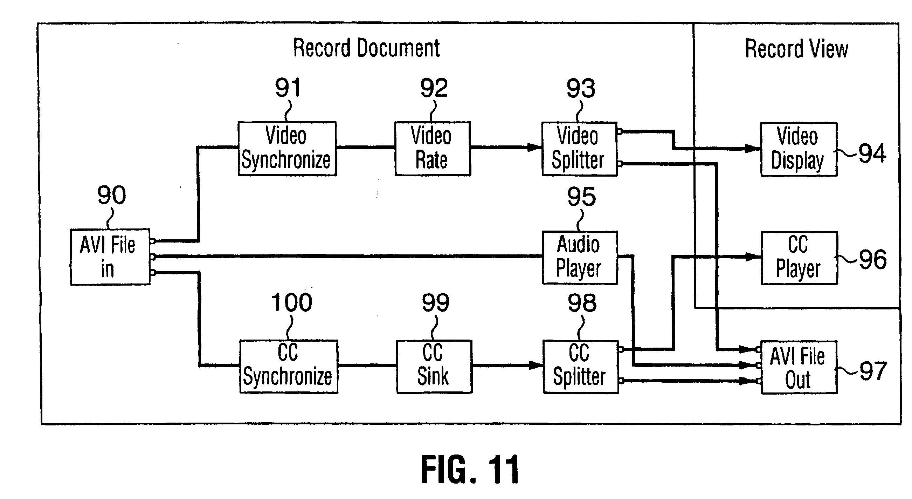

In Figure 11, an AVI file is received by unit 90 and the audio extracted in unit 95. The video is sent through video synchronizer 91, rate monitor 92 and video splitter 93 to video display 94 and output AVI file 97. The closed caption stream is sent through closed caption synchronizer 100, closed caption sink 99, which extracts closed caption text for continuous display, closed caption splitter 98, from where it is passed to closed caption display 96 and AVI output file 97. The units 94 and 96 allow the video to be displayed along with its associated closed caption text. The output file 97 allows the user to edit and re-record portions of the stored text.

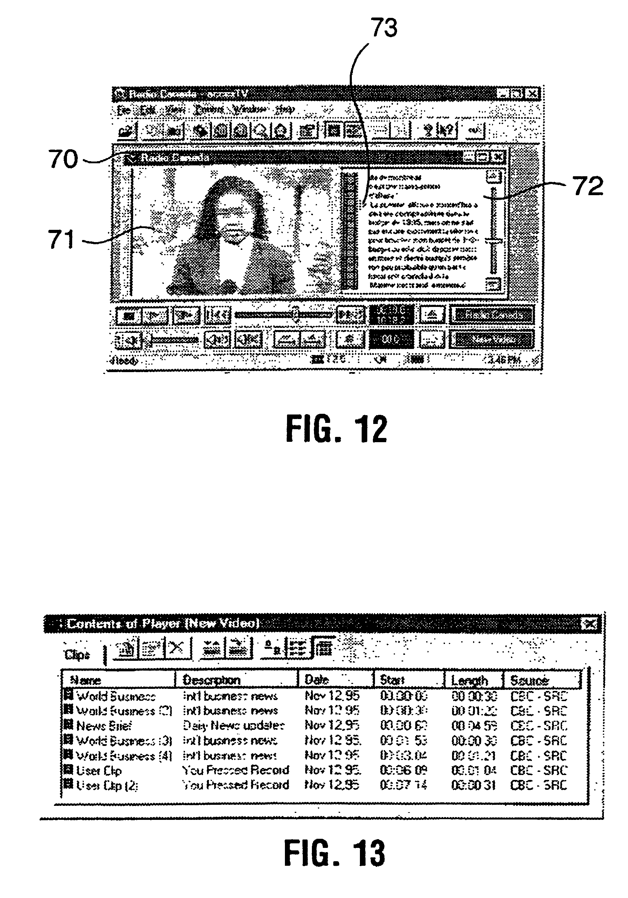

Figure 12 shows a typical display screen running in an active window 70 on visual display unit 28. Video segment 71 is playing along with its associated audio. Beside the video segment 71 is the closed caption text 72. Pointer 73 indicates the portion of text related to the current image 71. The pointer 73 can be dragged up and down with the mouse to cause the video corresponding to the indicated text to be played.

Figure 13 shows a window displaying a listing of recorded video clips. Double clicking on any of the items listed causes the item to appear in an active window along with the associated text for playback, which can be initiated using a Windows™ style control bar.

The system can be programmed to watch multiple channels simultaneously. In this case each channel has its own processing system as described with reference to Figure 9.

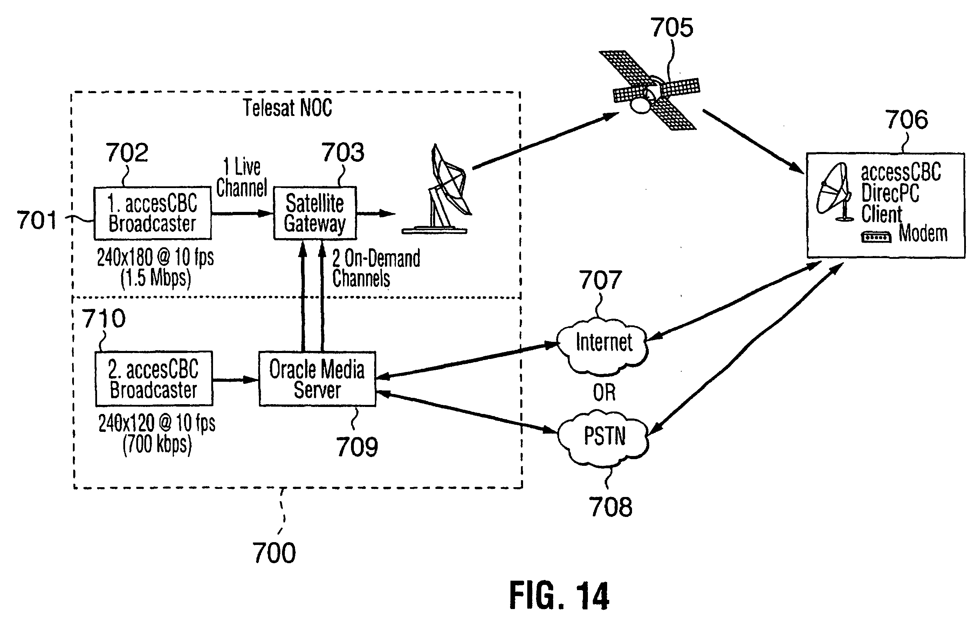

In the embodiment of Figure 14, block 700 contains a monitoring system as described above and outputs digital signals for distribution over a remote network. This is achieved by feeding the signals through satellite gateway 703 to satellite antenna 704, which sends them via satellite 705 to any one of a series of clients, such as 706. The clients 706 are connected back to the block 700 via the internet 707 or the public switched telephone network 708. The client 706 can use a service known as DirecPC, which provides a wide bandwidth downlink, for example, to the internet, with the uplink being provided through a conventional modem.

Unit 702 receives broadcast signals 701, for example from air or over a cable. These can be conventional analogue signals, or alternatively they can be digital signals, for example in MPEG format. The unit 702 receives instructions from client 706 over the network. When a pattern match is achieved, it send the program signals over the network to the client 706.

The system described in Figure 14 effectively acts as a network, with the unit 700 being the network server.

In a further enhancement, the client 706 is connected back to a media server 709, which permits access to "on-demand" channels. A second monitoring system 710 can be provided, if desired, both units 706 and 710 being controllable by the clients 706.

The described system thus has the advantage that it offers instant alert to events as they occur. Television feed can be automatically organized as it is stored; i.e., closed caption text is synchronized with the incoming video and audio. This provides the ability to automatically create a multimedia database from which items can be retrieved based on content, such as spoken words, and the ability to retrieve video and audio segments with word or phrase resolution. A stored video feed can be retrieved based on new information

The synchronized video, audio and closed captions can be distributed over computer networks.

The invention also offers a much lower cost due to the elimination of manual intervention, and a reduction of raw information flow, resulting in less network congestion.

## Claims

1. A system for monitoring broadcast signals, comprising
a) means for receiving the broadcast signals and generating program signal streams to make available programs carried by said broadcast signals;
b) user-operable selection means for inputting criteria identifying program content of interest to a user;
c) a database for storing data representing said criteria;
**characterised by**
d) recognition means for generating from said broadcast signals, for each program signal stream, a program data stream separate from said program signal streams, said program data stream continually representing broadcast program material and changing dynamically therewith;
e) means for synchronising said program data stream to said program signal streams so that said program data stream always corresponds to the program material being broadcast;
f) a comparator for comparing said program data stream with said stored data;
g) means for storing, when said program data stream matches said stored data, a segment of said program signal stream and a segment of the corresponding program data stream associated therewith while maintaining synchronism between the program data stream and the program material; and
h) display means permitting the user to examine a portion of a stored program segment by selecting the portion of the dynamic program data stream segment corresponding thereto.

2. A system as claimed in claim 1, wherein said recognition means decodes data signals embedded in said broadcast signals to produce said program data stream.

3. A system as claimed in claim 2, wherein said embedded data signals comprise a closed caption text stream.

4. A system as claimed in claim 1, wherein said recognition means comprise audio recognition means for analyzing audio content of the broadcast signals.

5. A system as claimed in claim 1, wherein said recognition means comprise pattern recognition means for analyzing video content of the broadcast signals.

6. A system as claimed in any one of claims 1 to 5, wherein said program segments are indexed on the basis of said program data stream.

7. A system as claimed in any one of claims 1 to 6, further comprising video and audio capture devices for generating respective video and audio signals providing said program signal streams.

8. A system as claimed in any one of claims 1 to 7, further comprising means for tagging the stored program signals with the time of broadcast.

9. A system as claimed in any one of claims 1 to 8, further comprising a device for generating an alert signal to alert the user to the presence of program content matching the user's selection criteria.

10. A system as claimed in claim 9, wherein said alert signal activates a video monitor.

11. A system as claimed in claim 10, wherein said video monitor is a television set.

12. A system as claimed in claim 10, wherein said video monitor forms part of a multimedia computer environment.

13. A system as claimed in claim 12, wherein said multimedia computer environment also provides said user-operable selection means.

14. A system as claimed in any one of claims 1 to 13, further comprising a short-term buffer for storing said program signal streams for a predetermined period to permit access to program content for a preselected time prior to detection of a program content match.

15. A system as claimed in any one of claims 1 to 14, which is connected to a computer network to permit clients thereon to individually perform queries and receive programs from the system according to their respective program criteria.

16. A system as claimed in claim 9, wherein said device transmits said alert signal to a remote location for reception by the user.

17. A system as claimed in claim 16, wherein said alert signal is a beeper signal.

18. A system as claimed in any one of claims 1 to 17, wherein said broadcast signals include a plurality of channels, said recognition means generate a plurality of data streams corresponding to said respective channels, and said comparator continually compares said program data contained in said plurality of program data streams with said stored data so as to monitor simultaneously said plurality of channels.

19. A system as claimed in any one of claims 1 to 18, wherein said database stores a plurality of predefined user profiles representing preselected criteria for respective users, and means are provided to activate any one of said predefined user profiles.

20. A system as claimed in any one of claims 1 to 19, wherein said broadcast signals are television signals, and said recognition means generate said program data stream from signals transmitted in the vertical blanking interval between successive television frames.

21. A system as claimed in any one of claims 1 to 19, wherein said broadcast signals are radio signals.

22. A system as claimed in any one of claims 1 to 21, which is located in a network server, said network server sending said program signals over the network to clients located thereon in response to a match between said program data stream and said stored data.

23. A system as claimed in claim 22, which is located in a network server, wherein said network server forms part of a local area network.

24. A system as claimed in claim 22, wherein said network server is located remotely from said clients and a long-distance communications link is established between said network server and said clients.

25. A system as claimed in claim 1, wherein the system is a multimedia computer system, comprising:
a central processing unit;
a video capture unit for receiving broadcast television signals and generating a video signal therefrom, said video capture unit providing said means for receiving broadcast signals;
a video display unit capable of displaying said video signals under program control; and
wherein said recognition means decodes data signals embedded in said television signals and generates said program data stream and said central processing unit is programmed to continually compare the program data with said stored data and to store a program segment with its associated program data stream when said program data matches said stored data.

26. A system as claimed in claim 25, wherein said data signals are embedded in the vertical blanking interval of said television signals.

27. A system as claimed in claim 26, wherein data signals are closed caption signals.

28. A system as claimed in claim 26, wherein said stored data represent one or more keywords selected by the user.

29. A system as claimed in claim 27, wherein said stored data represent a plurality of keywords, and said central processing unit stores said program segment when said plurality of keywords are detected in said program data stream within a preselected period in accordance with predefined Boolean logic.

30. A system as claimed in claim 29, wherein said stored segments have a length preset by the user.

31. A system as claimed in any one of claims 25 to 30, further comprising a buffer for temporarily storing said video signals prior to comparison of the associated program data with said stored data, said central processing unit being programmed to store a segment of said video signals for a period starting from a preselected amount of time prior to detection of a match of said program data and said stored data and finishing a preselected amount of time after a match of said program data and said stored data.

32. A system as claimed in claim 31, wherein said central processing unit stores multiple said segments indexed on the basis of said program data.

33. A system as claimed in any one of claims 25 to 31, wherein said computer system has an operating system employing multiple windows, and said video signals appear in one or more of said multiple windows under program control.

34. A system as claimed in claim 33, wherein said video signals appear in one or more of said multiple windows in response to a match of said program data and said stored data.

35. A system as claimed in claim 34, wherein said central processing unit is programmed to display a listing of stored program segments in one of said windows in response to a user command.

36. A system as claimed in claim 35, wherein text information derived from said program data stream is displayed in one of said windows.

37. A system as claimed in any one of claims 25 to 36, which forms part of a network server, said network server distributing program signals to clients on the network in response to said output condition or a user request.

38. A system as claimed in claim 37, wherein said network is a local area network.

39. A system as claimed in claim 37, wherein said clients are connected to said network server over long-distance communications links.

## Patentansprüche

1. System zur Überwachung von Rundfunksignalen, das folgendes umfaßt:
a) Mittel zum Empfang der Rundfunksignale und zur Erzeugung einer Programmsignalfolge zur Übertragung verfügbarer Programme durch diese Rundfunksignale;
b) benutzerbedienbare Auswahlmittel zur Eingabe von Kriterien, die den den Benutzer interessierenden Programminhalt identifizieren;
c) eine Datenbank zur Speicherung der diese Kriterien darstellenden Daten, **gekennzeichnet durch**
d) Erkennungsmittel zur Erzeugung - aus den Rundfunksignalen und für jede Programmsignalfolge - einer Programmdatenfolge getrennt von den Programmsignalfolgen, wobei diese Programmdatenfolge kontinuierlich das Sendeprogrammmaterial darstellt und sich damit dynamisch ändert;
e) Mittel zur Synchronisierung der Programmdatenfolge mit den Programmsignalfolgen, so daß die Programmdatenfolge immer dem gesendeten Programmmaterial entspricht;
f) Vergleicher zum Vergleichen der Programmdatenfolge mit den gespeicherten Daten;
g) Mittel zur Speicherung - wenn die Programmdatenfolge mit den gespeicherten Daten übereinstimmt - eines Segments der Programmsignalfolge und eines entsprechenden Segments der zugehörigen Programmdatenfolge mit gleichzeitigem Aufrechterhalten des Synchronismus zwischen der Programmdatenfolge und dem Programmmaterial; und
h) Anzeigemittel, die dem Benutzer die Kontrolle eines Teils des gespeicherten Programmsegments **durch** Auswahl des entsprechenden Teils des zugehörigen dynamischen Programmdatenfolge-Segments ermöglichen.

2. System nach Anspruch 1, **dadurch gekennzeichnet, daß** die Erkennungsmittel die in den Rundfunksignalen eingebetteten Datensignale decodieren, um diese Programmdatenfolge zu erzeugen.

3. System nach Anspruch 2, **dadurch gekennzeichnet, daß** die eingebetteten Datensignale eine dem gesprochenen Wort entsprechende Textfolge (*Closed Caption*) umfassen.

4. System nach Anspruch 1, **dadurch gekennzeichnet, daß** die Erkennungsmittel Audioerkennungsmittel zum Analysieren des Audioinhalts des Rundfunksignals umfassen.

5. System nach Anspruch 1, **dadurch gekennzeichnet, daß** die Erkennungsmittel Mustererkennungsmittel zum Analysieren des Videoinhalts des Rundfunksignals umfassen.

6. System nach einem der Ansprüche 1 bis 5, **dadurch gekennzeichnet, daß** die Programmsegmente auf der Basis von der Programmdatenfolge indiziert sind.

7. System nach einem der Ansprüche 1 bis 6, das weiterhin Video- und Audioerfassungsgeräte zur Erzeugung der entsprechenden Video- und Audiosignale, die die Programmsignalfolgen zur Verfügung stellen, umfaßt.

8. System nach einem der Ansprüche 1 bis 7, das weiterhin Mittel für die Markierung der gespeicherten Programmsignale mit der Sendezeit umfaßt.

9. System nach einem der Ansprüche 1 bis 8, das weiterhin eine Vorrichtung zur Erzeugung eines Warnsignals umfaßt, um den Benutzer auf die Anwesenheit eines solchen Programminhalts aufmerksam zu machen, das mit den Auswahlkriterien des Benutzers übereinstimmt.

10. System nach Anspruch 9, **dadurch gekennzeichnet, daß** das Warnsignal ein Bildschirmgerät aktiviert.

11. System nach Anspruch 10, **dadurch gekennzeichnet, daß** das Bildschirmgerät ein Fernsehapparat ist.

12. System nach Anspruch 10, **dadurch gekennzeichnet, daß** das Bildschirmgerät ein Bestandteil einer Multimedia-Computerumgebung ist.

13. System nach Anspruch 12, **dadurch gekennzeichnet, daß** die Multimedia-Computerumgebung auch die benutzerbedienbare Auswahlmittel zur Verfügung stellt.

14. System nach einem der Ansprüche 1 bis 13, das weiterhin einen kurzfristigen Pufferspeicher zur Speicherung der Programmsignalfolgen für eine vorbestimmte Dauer umfaßt, um Zugriff auf den Programminhalt für eine vorgewählte Dauer zu ermöglichen, ehe die Übereinstimmung eines Programminhalts festgestellt wird.

15. System nach einem der Ansprüche 1 bis 14, das an ein Computernetz angeschlossen ist, damit Kunden in diesem Netz individuell abfragen und aus dem System Programme nach ihren entsprechenden Programmkriterien empfangen können.

16. System nach Anspruch 9, **dadurch gekennzeichnet, daß** die Vorrichtung das Warnsignal an eine entfernte Stelle zum Empfang von dem Benutzer sendet.

17. System nach Anspruch 16, **dadurch gekennzeichnet, daß** das Warnsignal ein Piepsignal ist.

18. System nach einem der Ansprüche 1 bis 17, **dadurch gekennzeichnet, daß** die Rundfunksignale eine Mehrzahl von Kanälen umfassen, daß die Erkennungsmittel eine Mehrzahl von den Kanälen entsprechenden Datenfolgen erzeugen, und der Vergleicher die in der Mehrzahl von Programmdatenfolgen enthaltenen Programmdaten mit den gespeicherten Daten kontinuierlich vergleicht, um die Mehrzahl von Kanälen gleichzeitig zu überwachen.

19. System nach einem der Ansprüche 1 bis 18, **dadurch gekennzeichnet, daß** die Datenbank eine Mehrzahl von vordefinierten Benutzerprofilen speichert, die die vorgewählten Kriterien für die jeweiligen Benutzer darstellen, und Mittel zur Verfügung stellt, um beliebige vordefinierte Benutzerprofile zu aktivieren.

20. System nach einem der Ansprüche 1 bis 19, **dadurch gekennzeichnet, daß** die Rundfunksignale Fernsehsignale sind, und die Erkennungsmittel die Programmdatenfolgen aus den Signalen erzeugen, die in der vertikalen Austastlücke zwischen den aufeinanderfolgenden Bildfeldern übertragen werden.

21. System nach einem der Ansprüche 1 bis 19, **dadurch gekennzeichnet, daß** die Rundfunksignale Radiosignale sind.

22. System nach einem der Ansprüche 1 bis 21, das sich in einem Netzversorger befindet, **dadurch gekennzeichnet, daß** der Netzversorger Programmsignale durch das Netz an seine Kunden sendet, wenn die Programmdatenfolge mit den gespeicherten Daten übereinstimmt.

23. System nach Anspruch 22, das sich in einem Netzversorger befindet, **dadurch gekennzeichnet, daß** der Netzversorger Bestandteil eines Ortsnetzes (*Local Area Network*) ist.

24. System nach Anspruch 22, **dadurch gekennzeichnet, daß** der Netzversorger sich entfernt von den Kunden befindet und eine Fernübertragungsverbindung zwischen dem Netzversorger und den Kunden hergestellt wird.

25. System nach Anspruch 1, **dadurch gekennzeichnet, daß** das System ein Multimedia-Computersystem ist, das die folgenden Komponenten umfaßt:
eine Zentraleinheit;
eine Videoerfassungseinheit zum Empfang von gesendeten Fernsehsignalen und Erzeugung eines Videosignals daraus, **dadurch gekennzeichnet, daß** die Videoerfassungseinheit Mittel zum Empfang der gesendeten Signale zur Verfugung stellt; ein Bildschirmgerät zur Darstellung der Videosignale unter der Programmkontrolle; und
wobei die Erkennungsmittel die in den Fernsehsignalen eingebetteten Datensignale decodieren sowie die Programmdatenfolge erzeugen, und die Zentraleinheit so programmiert ist, daß sie kontinuierlich die Programmdaten mit den gespeicherten Daten vergleicht und ein Programsegment mit der zugehörigen Programmdatenfolge speichert, wenn die Programmdaten mit den gespeicherten Daten übereinstimmen.

26. System nach Anspruch 25, **dadurch gekennzeichnet, daß** die Datensignale in der vertikalen Austastlücke der Fernsehsignale eingebettet sind.

27. System nach Anspruch 26, **dadurch gekennzeichnet, daß** die Datensignale Signale einer dem gesprochenen Wort entsprechenden Textfolge (*Closed Caption*) sind.

28. System nach Anspruch 26, **dadurch gekennzeichnet, daß** die gespeicherten Daten ein oder mehrere vom Benutzer ausgewählte Schlüsselwörter darstellen.

29. System nach Anspruch 27, **dadurch gekennzeichnet, daß** die gespeicherten Daten eine Mehrzahl von Schlüsselwörtern darstellen, und die Zentraleinheit das Programmsegment speichert, wenn die Mehrzahl von Schlüsselwörtern in der Programmdatenfolge innerhalb eines vorgewählten Zeitabschnitts entsprechend einer vordefinierten Booleschen Logik erkannt wird.

30. System nach Anspruch 29, **dadurch gekennzeichnet, daß** die gespeicherten Segmente eine vom Benutzer festgelegte Länge haben.

31. System nach einem der Ansprüche 25 bis 30, das weiterhin einen Pufferspeicher zur vorübergehenden Speicherung der Videosignale vor dem Vergleich der zugehörigen Programmdaten mit den gespeicherten Daten umfaßt, **dadurch gekennzeichnet, daß** die Zentraleinheit programmiert ist, ein Segment der Videosignale für eine gewisse Zeitspanne zu speichern, die zu einer vorgegebenen Zeit vor der Erkennung der Übereinstimmung der Programmdaten mit den gespeicherten Daten anfängt, und zu einer vorgegebenen Zeit nach der Erkennung der Übereinstimmung der Programmdaten mit den gespeicherten Daten endet.

32. System nach Anspruch 31, **dadurch gekennzeichnet, daß** die Zentraleinheit mehrere, auf Basis der Programmdaten indizierte Segmente speichert.

33. System nach einem der Ansprüche 25 bis 31, **dadurch gekennzeichnet, daß** das Computersystem ein Betriebssystem mit mehreren Fenstern umfaßt, und die Videosignale unter der Programmkontrolle in einem oder mehreren Fenstern erscheinen.

34. System nach Anspruch 33, **dadurch gekennzeichnet, daß** Videosignale in einem oder mehreren Fenstern erscheinen, wenn die Programmdaten und die gespeicherten Daten übereinstimmen.

35. System nach Anspruch 34, **dadurch gekennzeichnet, daß** die Zentraleinheit programmiert ist, eine Liste der gespeicherten Programmsegmente in einem der Fenster nach einem entsprechenden Benutzerbefehl anzuzeigen.

36. System nach Anspruch 35, **dadurch gekennzeichnet, daß** die der Programmdatenfolge entnommene Textinformation in einem der Fenster angezeigt wird.

37. System nach einem der Ansprüche 25 bis 36, das ein Bestandteil eines Netzversorgers ist, **dadurch gekennzeichnet, daß** der Netzversorger auf Basis einer Ausgabebedingung oder einer Benutzeranforderung Programmsignale an die Kunden in dem Netz verteilt.

38. System nach Anspruch 37, **dadurch gekennzeichnet, daß** das Netz ein Ortsnetz (*Local Area Network*) ist.

39. System nach Anspruch 37, **dadurch gekennzeichnet, daß** die Kunden durch Fernübertragungsverbindungen an den Netzversorger angeschlossen sind.

## Revendications

1. Un système de surveillance de signaux de diffusion, qui comprend :
a) le moyen de recevoir les signaux de diffusion et de produire des flots de signaux de programme afin de rendre disponibles les programmes portés par lesdits signaux de diffusion;
b) le moyen de sélection conçu pour l'utilisateur servant à entrer des critères identifiant le contenu du programme qui intéresse l'utilisateur;
c) une base de données servant à stocker des données représentant lesdits critères;
**caractérisé par**
d) le moyen de reconnaissance pour la production à partir des signaux de diffusion, pour chaque flot de signaux de programme, un flot de données de programme distinct des flots de signaux de programme, ledit flot de données de programme représentant continuellement le matériel de programme de diffusion et changeant dynamiquement avec lui;
e) le moyen de synchroniser ledit flot de données de programme avec les flots de signaux de programme de sorte que ledit flot de données de programme corresponde toujours au matériel de programme étant diffusé;
f) un comparateur pour comparer ledit flot de données de programme aux données stockées;
g) le moyen de stocker, quand ledit flot de données de programme correspond aux données stockées, un segment du flot de signaux de programme et un segment du flot de données de programme correspondant associé au flot tout en maintenant le synchronisme entre le flot de données de programme et le matériel de programme; et
h) le moyen d'affichage permettant à l'utilisateur d'examiner une partie d'un segment de programme stocké en choisissant la partie du segment de flot de données de programme dynamique qui lui correspond.

2. Un système selon la revendication 1, **caractérisé en ce que** ledit moyen de reconnaissance décode des signaux de données enchâssés dans lesdits signaux de diffusion afin de produire ledit flot de données de programme.

3. Un système selon la revendication 2, **caractérisé en ce que** lesdits signaux de données enchâssés comprennent un flot de texte de sous-titre codé.

4. Un système selon la revendication 1, **caractérisé en ce que** ledit moyen de reconnaissance comprend le moyen de reconnaissance audio pour analyser le contenu audio des signaux de diffusion.

5. Un système selon la revendication 1, **caractérisé en ce que** ledit moyen de reconnaissance comprend le moyen de reconnaissance de formes pour l'analyse du contenu vidéo des signaux de diffusion.

6. Un système selon l'une quelconque des revendications 1 à 5, **caractérisé en ce que** lesdits segments de programme sont indexés sur la base du flot de données de programme.

7. Un système selon l'une quelconque des revendications 1 à 6, qui comprend aussi des-dispositifs de saisie vidéo et audio pour la production de signaux vidéo et audio respectifs qui fournissent lesdits flots de signaux de programme.

8. Un système selon l'une quelconque des revendications 1 à 7 , qui comprend aussi le moyen d'étiqueter lesdits signaux de programme stockés avec la durée de la diffusion.

9. Un système selon l'une quelconque des revendications 1 à 8 , qui comprend aussi un dispositif pour produire un signal d'avertissement en vue d'avertir l'utilisateur de la présence du contenu de programme correspondant aux critères de sélection de l'utilisateur.

10. Un système selon la revendication 9, **caractérisé en ce que** ledit signal d'avertissement active un écran de contrôle vidéo.

11. Un système selon la revendication 10, **caractérisé en ce que** ledit écran de contrôle vidéo est un poste de télévision.

12. Un système selon la revendication 10, **caractérisé en ce que** ledit écran de contrôle vidéo fait partie d'un environnement d'ordinateur multimédia.

13. Un système selon la revendication 12, **caractérisé en ce que** ledit environnement d'ordinateur multimédia fournit aussi le moyen de sélection conçu pour l'utilisateur.

14. Un système selon l'une quelconque des revendications 1 à 13, qui comprend aussi une mémoire tampon à court terme pour le stockage des flots de signaux de programme pour une période prédéterminée afin de permettre l'accès au contenu du programme pendant une durée présélectionnée avant la détection d'un contenu de programme correspondant.

15. Un système selon l'une quelconque des revendications 1 à 14, qui est relié à un réseau informatique afin de permettre aux clients du réseau d'effectuer individuellement des demandes d'information et de recevoir des programmes du système conformément à leurs critères de programme respectif.

16. Un système selon la revendication 9, **caractérisé en ce que** ledit dispositif transmet ledit signal d'avertissement à un emplacement éloigné pour la réception par l'utilisateur.

17. Un système selon la revendication 16, **caractérisé en ce que** ledit signal d'avertissement est un téléavertisseur.

18. Un système selon l'une quelconque des revendications 1 à 17 , **caractérisé en ce que** lesdits signaux de diffusion comprennent une pluralité de voies, ledit moyen de reconnaissance pouvant produire une pluralité de flots de données correspondant aux voies respectives, et ledit comparateur compare continuellement lesdites données de programme contenues dans ladite pluralité de flots de données de programme avec lesdites données stockées de façon à surveiller simultanément ladite pluralité de voies.

19. Un système selon l'une quelconque des revendications 1 à 18 , **caractérisé en ce que** la base de données stocke une pluralité de profils d'utilisateur prédéfinis représentant les critères présélectionnés pour les utilisateurs respectifs, et le moyen est fourni pour activer l'un quelconque des profils d'utilisateur prédéfinis.

20. Un système selon l'une quelconque des revendications 1 à 19 , **caractérisé en ce que** lesdits signaux de diffusion sont des signaux de télévision, et ledit moyen de reconnaissance produit ledit flot de données de programme à partir de signaux transmis dans l'intervalle de suppression vertical entre les trames de télévision successives.

21. Un système selon l'une quelconque des revendications 1 à 19 , **caractérisé en ce que** lesdits signaux de diffusion sont des signaux radio.

22. Un système selon l'une quelconque des revendications 1 à 21 , qui est situé dans un serveur de réseau, ledit serveur de réseau envoyant lesdits signaux de programme à travers le réseau à des clients situés sur le réseau en réponse à une correspondance entre ledit flot de données de programme et lesdites données stockées.

23. Un système selon la revendication 22, qui est situé dans un serveur de réseau, **caractérisé en ce que** ledit serveur de réseau fait partie d'un réseau local.

24. Un système selon la revendication 22, **caractérisé en ce que** ledit serveur de réseau est situé à une certaine distance des clients et un lien de communications à longue distance est établi entre ledit serveur de réseau et lesdits clients.

25. Un système selon la revendication 1, **caractérisé en ce que** le système est un système d'ordinateur multimédia comprenant :
une unité centrale de traitement;
une unité de saisie d'images vidéo pour la réception de signaux télédiffusés et la production d'un signal vidéo à partir de ces signaux, ladite unité de saisie d'images vidéo fournissant ledit moyen de réception de signaux de diffusion; une unité d'affichage vidéo capable d'afficher lesdits signaux vidéo sous le contrôle du programme; et
**caractérisé en ce que** ledit moyen de reconnaissance décode les signaux de données enchâssés dans lesdits signaux de télévision et produit ledit flot de données de programme, et ladite unité centrale est programmée de façon à comparer continuellement les données de programme aux données stockées et à stocker un segment de programme avec son flot de données de programme associé quand lesdites données de programme correspondent aux données stockées.

26. Un système selon la revendication 25, **caractérisé en ce que** lesdits signaux de données sont enchâssés dans l'intervalle de suppression vertical des signaux de télévision.

27. Un système selon la revendication 26, **caractérisé en ce que** lesdits signaux de données sont des signaux de sous-titres codés.

28. Un système selon la revendication 26, **caractérisé en ce que** lesdites données stockées représentent un ou plusieurs mots clés choisis par l'utilisateur.

29. Un système selon la revendication 27, **caractérisé en ce que** lesdites données stockées représentent une pluralité de mots clés, et ladite unité centrale de traitement stocke ledit segment de programme quand ladite pluralité de mots clés est détectée dans ledit flot de données de programme à l'intérieur d'une période présélectionnée conformément à la logique booléenne prédéfinie.

30. Un système selon la revendication 29, **caractérisé en ce que** lesdits segments stockés ont une longueur préétablie par l'utilisateur.

31. Un système selon l'une quelconque des revendications 25 à 30, qui comprend aussi une mémoire tampon pour stocker provisoirement lesdits signaux vidéo avant la comparaison des données de programme associées aux données stockées, ladite unité centrale de traitement étant programmée afin de stocker un segment des signaux vidéo pendant une durée débutant à un moment présélectionné avant la détection d'une correspondance entre les données de programme et les données stockées et se terminant à un moment présélectionné après une correspondance entre les données de programme et lesdites données stockées.

32. Un système selon la revendication 31, **caractérisé en ce que** ladite unité centrale de traitement stocke plusieurs segments indexés sur la base des données de programme.

33. Un système selon l'une quelconque des revendications 25 à 31, **caractérisé en ce que** ledit système informatique comporte un système d'exploitation utilisant plusieurs fenêtres, et lesdits signaux vidéo apparaissent dans une ou plusieurs des fenêtres multiples sous le contrôle du programme.

34. Un système selon la revendication 33, **caractérisé en ce que** lesdits signaux vidéo apparaissent dans l'une ou plusieurs des fenêtres multiples en réponse à une correspondance entre les données de programme et lesdites données stockées.

35. Un système selon la revendication 34, **caractérisé en ce que** ladite unité centrale de traitement est programmée afin d'afficher une liste des segments de programme stockés dans l'une des fenêtres en réponse à la commande d'un utilisateur.

36. Un système selon la revendication 35, **caractérisé en ce que** l'information dérivée du flot de données de programme est affichée dans l'une des fenêtres.

37. Un système selon l'une quelconque des revendications 25 à 36, qui fait partie d'un serveur de réseau, ledit serveur de réseau distribuant des signaux de programme aux clients sur le réseau, en réponse à ladite condition de sortie ou à la demande d'un client.

38. Un système selon la revendication 37, **caractérisé en ce que** ledit réseau est un réseau local.

39. Un système selon la revendication 37, **caractérisé en ce que** lesdits clients sont reliés au serveur de réseau au moyen de liens de communications à longue distance.
